# EUROPEAN PATENT SPECIFICATION

(11) **EP 0 338 227 B1**
(45) Date of publication and mention of the grant of the patent: **26.10.1994**
(21) Application number: 89103924.0
(22) Date of filing: 06.03.1989
(51) Int. Cl.: G01L 3/10

(54) **Magnetostrictive torque sensor**
Magnetostriktiver Drehmomentwandler
Capteur de couple à magnétostriction

(30) Priority: 04.03.1988 JP 50819/88; 04.03.1988 JP 50820/88; 17.03.1988 JP 61768/88; 30.03.1988 JP 74822/88; 07.04.1988 JP 84022/88
(43) Date of publication of application: 25.10.1989
(73) Proprietor: NISSAN MOTOR CO., LTD., Yokohama-shi Kanagawa-ken (JP); DAIDOTOKUSHUKO KABUSHIKIKAISHA, Nagoya-shi Aichi-ken (JP)
(72) Inventor: Aoki, Hiroyuki, Yokohama-shi Kanagawa-ken (JP); Yahagi, Shinichiro, Ohbu-shi Aichi-ken (JP); Saito, Takanobu, Okazaki-shi Aichi-ken (JP)
(74) Representative: Grünecker, Kinkeldey, Stockmair & Schwanhäusser Anwaltssozietät

(56) References cited:
- EP-A- 0 136 086
- EP-A- 0 162 957
- EP-A- 0 261 980
- US-A- 4 506 554
- PATENT ABSTRACTS OF JAPAN, vol. 8, no. 165 (P-291)[1602], 31st July 1984; & JP-A-59 61 730

## Description

### BACKGROUND OF THE INVENTION

### Field of the Invention

The present invention relates generally to a torque sensor for monitoring torque exerted on a shaft or axle for object. More specifically, the invention relates to an magnetostriction type torque sensor.

### Description of the Background Art

From EP 0261980 A2, which is a state of art according to Article 54(3)EPC, published March 30, 1988 there is known a torque detecting device having a measuring shaft and a coil for forming a magnetic circuit incorporating said measuring shaft into a part of the magnetic path. The measuring shaft of a conventional torque sensor (for monitoring the torque exerted on a shaft) may comprise in total 0.01 to 5.0 % of at least one of B, Si, Ge, Sn, Pb, P, Sb, Cu, Ni, Co, Mn, Cr, Mo, W, V, Nb, Ta, Ti, Zr, Hf, Be, Sc, Y and Rare Earth Element, according to the chemical symbols given in lines 15 and 16, of page 6 from EP 0261980 A2.

A typical construction of a magnetostriction type torque sensor, known in the prior art, generally comprise a shaft member to measure torque exerted thereto, and an electromagnetic coil provided in the proximity of the shaft with defining a small gap between the opposing surfaces, and having yoke made of material having high prmeability material, such as permalloy. An magnetic filed is thus generated around the shaft by energizing the electromagnetic coil for monitoring magnetostriction component by means of a detector coil which is also wound on the yoke.

In the practical measurement of the torque exerted on the shaft member, an electric power is supplied to the electromagnetic coil for energizing the latter. The electromagnetic coil energized generates magnetic flux passing the gap between the shaft and the yoke to form a magnetic circuit. The detector coil disposed in the magnetic circuit. The permeability of the shaft member is variable depending upon the magnetostriction therein. Therefore, density of the magnetic flux to be detected by the electric power induced in the detector coil becomes variable depending upon the magnetostriction in the shaft member.

In case that such magnetostriction type torque sensor is applied for monitoring torque exerted on an axle in an automotive power train, such as a drive shaft, a column shaft and so forth, the variation of the generated power in the detector coil tends to become smaller than that required for permitting accurate measurement. Namely, the axle in the power train is generally formed of steel for machine structural use, such as that produced according to JIS SC, SCr, SCM, SNCM and so forth. Such axle is provided substantially high strength to have low sensitivity in variation of the exerted torque. Therefore, the sensitivity of the torque sensor becomes low to expand hysterisis range for lowering accuracy in measurement of the measured torque.

### SUMMARY OF THE INVENTION

Therefore, it is an object of the present invention to provide a torque sensor which overcome the problems in the prior art and can provide high accuracy in measurement of the exerted torque even when it is applied to an axle or a shaft made of steel for mechanical structural use.

According to the present invention, said object is achieved by a torque sensor for monitoring torque exerted on a shaft member, comprising:
means for generating magnetic flux for forming a magnetic circuit extending through a predetermined portion of said shaft member; and means for monitoring magnetostriction in said shaft member for producing a torque indicative signal having a value variable depending upon said magnetostriction; said shaft member being made of steel having, at least at said predetermined portion, a composition as follows:
0.1 to 1.5 wt.% carbon,
more than or equal to 0.5 wt.% and less than or equal to 4.0 wt.% silicon,
less than or equal to 3.0 wt.% manganese,
more than 0.1 wt.% and less than or equal to 3.0 wt.% aluminum and less than or equal to 5.0 wt.% Ni and/or less than or equal to 5.0 wt.% chromium,
said steel having at least at predetermined portion a remaining content of iron and inevitable impurities.

The steel may further contain one or more material selected from the following materials:
Pb : less than or equal to 0.5 Wt%;
Bi : less than or equal to 0.5 Wt%;
S : less than or equal to 0.5 Wt%;
P : less than or equal to 0.3 Wt%;
Te : less than or equal to 0.5 Wt%;
Se : less than or equal to 0.5 Wt%; and
Ca : less than or equal to 0.05 Wt%.

The steel may further contain one or more material selected from the following materials:
Cu : less than or equal to 1.0 Wt%;
Mo : less than or equal to 1.0 Wt%;
B : less than or equal to 0.05 Wt%;
W : less than or equal to 0.5 Wt%;
V : less than or equal to 0.5 Wt%;
Ti : less than or equal to 0.5 Wt%;
Nb : less than or equal to 0.5 Wt%;
Ta : less than or equal to 0.5 Wt%;
Zr : less than or equal to 0.5 Wt%;
Hf : less than or equal to 0.5 Wt%;
N : less than or equal to 0.1 Wt%.

According to a further aspect of the invention, at least a predetermined portion of the shaft member has a property satisfying one of the following conditions (A) to (C);
(A) saturated magnetostriction λs satisfies:

   $\text{0.5 x 10⁻⁶ ≦ | λs | ≦ 15 x 10⁻⁶}$
(B) ratio between saturated magnetostriction and crystalline magnetic unisotropy coefficient K₁ (J/m³) satisfies:

   $\text{| K₁/λs | ≧ 6 x 10⁸ (K/m³);}$

   an elastic limit τ_{E} N/mm² (kgf/mm²) versus twisting stress can satisfy:

   ${\text{τ}}_{\text{E}} \text{≧ (20 (Kgf/mm²)) 196 N/mm²}$

   0.2% yield point τ_{0.2} N/mm² (Kgf/mm²) to twisting stress cap satisfy:

   ${\text{τ}}_{\text{0.2}} \text{≧ (40 (Kgf/mm²)) 392,2 N/mm²}$
and (C) a coercive force Hc A/m (Oe) of the magnetic force can satisfy:

   $\text{398 A/m (5(Oe)) ≦ Hc ≦ (50 (Oe)) 3980 A/m}$

   and/or the initial permeability µᵢ is in a range of:

   ${\text{10 ≦ µ}}_{\text{l}} \text{≦ 100}$

   and the maximum permeability µₘ is in a range of:

   ${\text{50 ≦ µ}}_{\text{m}} \text{≦ 250.}$

### BRIEF DESCRIPTION OF THE DRAWINGS

The present invention will be understood more fully from the detailed description given herebelow and from the accompanying drawings of the preferred embodiment of the invention, which, however, should not be taken to limit the invention to the specific embodiment but are for explanation and understanding only.

In the drawings:
Fig. 1 is a section of the preferred embodiment of a torque sensor according to the present invention;
Fig. 2 is a circuit diagram of the preferred embodiment of the torque sensor of Fig. 1;
Fig. 3 is a graph showing variation of sensor output in relation to variation of a torque exerted on a shaft member;
Fig. 4 is a graph showing variation of sensitivity in relation to content of Si; and

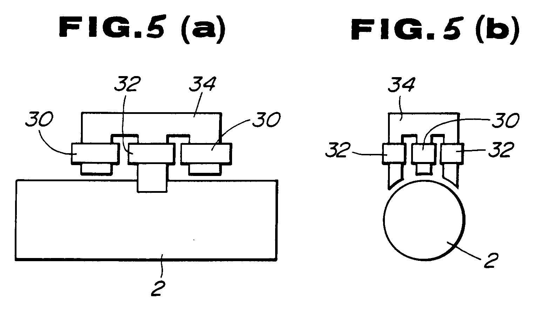

Figs. 5(a) and 5(b) shows alternative construction of the torque sensor assembly for which the preferred compositions of shaft members are applicable.

### DESCRIPTION OF THE PREFERRED EMBODIMENT

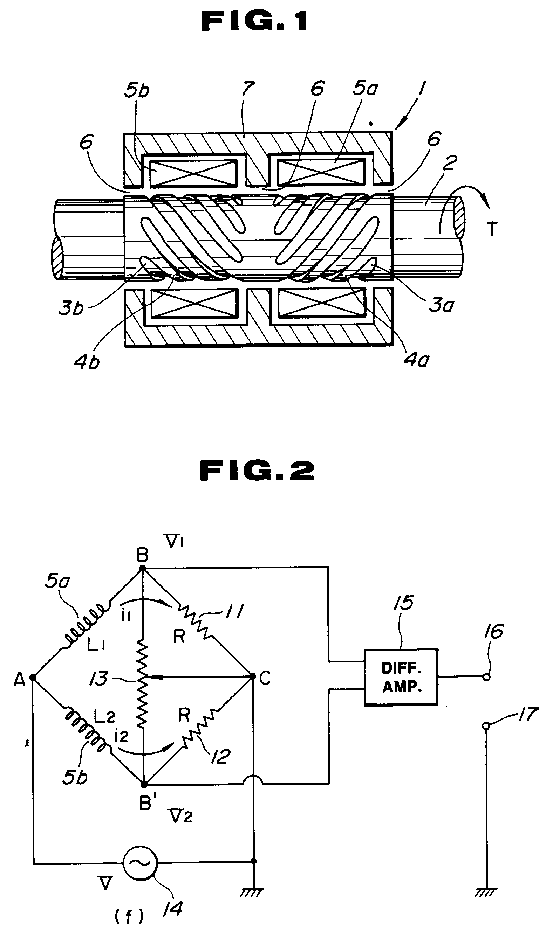

Referring now to the drawings, particularly to Fig. 1, the preferred embodiment of a torque sensor unit 1, according to the present invention, comprises a shift member 2 about which an exerted torque is to be measured, and a sensor assembly 8. The shaft member 2 is formed with tilted grooves 3a and 3b which are tilted with respect to the axis of the shaft member at a predetermined angle, e.g. 45^{o}. The tilting directions of the grooves 3a and 3b are opposite to each other so that unisotropy is provided between the sections respectively provided the grooves 3a and 3b. the tilted grooves 3a and 3b are separated by lands 4a and 4b extending in tilted fashion between the grooves.

The sensor assembly 8 comprises a pair of annular coils 5a and 5b are arranged in opposition to the section where the grooves 3a and 3b are provided. The coils 5a and 5b are received on a yoke 7 having an magnetically separating annular projection 6 extended from the position intermediate between coil receptacle portions for receiving the coils 5a and 5b. The yoke 7 is formed of a material having high permeability.

The coils 5a and 5b form a bridge circuit together with resistors 11 and 12. A variable register 13 is also disposed between junctions B and B' between the coil 5a and the resistor 11 and between the coil 5b and the resistor 12, for balancing. Junctions A and C respectively between the coils 5a and 5b and between the resistors 11 and 12 are connected to an oscillator 14. The oscillator 14 is so designed as to energize the coils 5a and 5b by the oscillating frequency signal. The junctions B and B' are connected to a differential amplifier 15. The differential amplifier 15 is designed to output a monitored torque indicative signal through output terminals 16 and 17.

The coils 5a and 5b are energized by the frequency signal supplied from the oscillator 14 to generate magnetic flux extending through the associated portions of the shaft member 2, for which associated portions the grooves 3a and 3b are formed, to form magnetic circuits. In the shown embodiment, the coils 5a and 5b serve as the electromagnetic coils for forming the magnetic circuits and the detector coils for detecting variation of permeability in the associated portions.

In the practical operation in monitoring torque to be exerted on the shaft member 2, the oscillator 14 generates a constant amplitude (V) and constant frequency (f) of energization power to supply the coils 5a and 5b. The coils 5a and 5b are thus excited to generate magnetic flux therearound. The magnetic flux generated by the coils forms magnetic loop circuit extending the gap between the yoke 7 and the shaft member 2, and the grooved portions of the shaft member. Because the power applied to the coils 5a and 5b is alternating current, eddy current is induced in the shaft member. The level of the eddy current nay be increased by increasing the frequency of the oscillation power to be applied to the coil 5a and 5b. The magnitude of eddy current is maximum at the radial center of the shaft member and zero at the external surface. Therefore, the magnetization at the surface can follow variation of the magnetic field. However, variation of magnetization at the center is prevented by the strong eddy current.

Therefore, the magnetic flux generated by the coils 5a and 5b flows through the surface of the shaft member. For the magnetic flux flowing on the surface of the shaft member 2, the grooves 3a and 3b serve as resistance so that the area of flow of the magnetic flux is generally limited to the lands 4a and 4b defined between respectively adjacent grooves 3a and 3b. Therefore, configuration and tilting angle of the grooves 3a and 3b and the lands 4a and 4b substantially influences for unisotropy.

As set forth, the tilting directions of the grooves 3a and 3b end the lands 4a and 4b are opposite to each other with equal tilting angle with respect to the axis of the shaft member 2. The best tilting angle is selected at an angle corresponding to the direction of a primary stress to be exerted on the shaft member. Since the primary stress is exerted at an angle approximately or precisely at 45^{o}, the tilting angles of the grooves 3a and 3b and the lands 4a and 4b employed in the shown embodiment are selected at 45^{o}. By this, magnetostriction at the lands 4a and 4b which are oriented at outermost position, in response to the torque exerted on the shaft becomes maximum.

Here, assuming the torque T as shown in Fig. 1 is exerted on the shaft member, maximum tension stress +σ is exerted on the lands 4a and maximum compression stress -σ is exerted on the lands 4b. Assuming that the shaft member 2 has positive magnetostriction characteristics, permeability at the lands 4a increases according to increasing of the tension stress and the permeability at the lands 4b decreases according to increasing of the compression stress. This causes increasing of inductance at the coil 5a and decreasing of the inductance at the coil 5b. This destroys the balance in the bridge circuit of Fig. 2 so that the torque detection output corresponding to the exerted torque magnitude appears on the output terminals 16 and 17.

On the other hand, when the torque in opposite direction is exerted, maximum tension stress +σ is exerted on the lands 4b and maximum compression stress -σ is exerted on the lands 4a. The permeability at the lands 4b increases according to increasing of the tension stress and the permeability at the lands 4a decreases according to increasing of the compression stress. This causes increasing of inductance at the coil 5b and decreasing of the inductance at the coil 5a. This destroys the balance in the bridge circuit of Fig. 2 so that the torque detection output corresponding to the exerted torque magnitude appears on the output terminals 16 and 17.

Assuming that the inductances of the coils 5a and 5b are respectively L₁ and L₂, the resistance of both of the resistors 11 and 12 are R, the amplitude and the frequency of the alternating current power generated by the oscillator 14 are respectively V and f, the current level i₁ and i₂ flowing through the component A - B - C and the component A - B' -C of the bridge circuit can be illustrated by:

${\text{i₁ = V/{R² + (2πfL₁)²}}}^{\text{1/2}}$
${\text{i₂ = V/{R² + (2πfL₂)²}}}^{\text{1/2}}$

Fro, the equations set out above, the potential V₁ at the junction B can be illustrated by:

$\text{V₁ = i₁ x R}$

Similarly, the potential V₂ at the junction B' can be illustrated by:

$\text{V₂ = i₂ x R}$

Therefore, the difference of potential at the junctions B and B' can be illustrated by | V₁ - V₂ |. This can be converted into:

${\text{| 1/{R² + (2πfL₁)²}}}^{\text{1/2}} {\text{- 1/{R² + (2πfL₂)²}}}^{\text{1/2}} \text{| x R x V}$

By calculating the above in the differential amplifier 15, the torque indicative output can be obtained.

It should be appreciated that, according to the shown embodiment, by employing the symmetrically formed grooves with the opposite tilting angle, influence of the temperature variation for the permeability can be successfully canceled for maintaining the zero output point constant. This technology is advantageously introduced for providing substantially high accuracy in measurement of the torque exerted on the shaft member.

In the preferred embodiment, the part of the shaft member 2 serving as part of magnetic circuit or the whole of the shaft member is made of a steel which has following composition:
C : 0.1 to 1.5 Wt%;
Si : more than or equal to 0.5 Wt% and less than or equal to 4.0 Wt%);
Mn : less than or equal to 3.0 Wt%;
Al : more than 0.1 Wt% and less than or equal to 3.0 Wt%
Ni : less than or equal to 5.0 Wt% and/or Cr : less than or equal to 5.0 Wt%.

The content of C is preferred in the range set forth above. As will be appreciated, enough amount of C is necessary to be contained in the steel for providing sufficient strength for using as a steel for mechanical structural use, such as for axles or shafts in an automotive power train. In order to provide sufficient strength for the steel, 0.1 Wt% is minimum content for using the steel for forming driver shaft, column shaft and so forth. On the other hand, excessive content of C will lower toughness or degrade workability in cold rolling. Therefore, maximum content of C is set at 1.5 Wt%. In case that the steel is subject to carburizing, content of C is to be limited to be less than or equal to 0.35 Wt% so that C content during carburizing may not exceed 1.5 Wt%.

On the other hand, Si is used for deoxidation agent and, as well, is known as a material for reinforcing the strength. However, when excessive amount of Si is contained in the steel, it degrades toughness. Therefore, the content of Si has to be limited to be less than or equal to 4.0 Wt%. In case that the composition of the shaft member does not contain Co, improvement of sensitivity is insufficient in the content less than 0.5 Wt%. Therefore, when Co is not contained, the content of Si has to be greater than or equal to 0. 5 Wt%. On the other hand, Mn is used as deoxidation and desulphurization flux. Mn is known to improve hardenability and increase strength. However, excessive amount of Mn may cause degradation of workability. Therefore, the maximum content of Mn in the steal is set at 3.0 Wt%. Al is effective for improving sensitivity and reducing hysterisis. Furthermore, Al is effective for making the crystal steel smaller and improves wear resistance and fatigue strength. Especially, presence of Al is advantageous when nitriding treatment is performed. However, when Al content exceeds 3.0 Wt%, it causes lowering or toughness. Therefore, the Al content is limited to be less than or equal to 3.0 Wt%.

Co is effectively for improving sensitivity. Therefore, Co can be added for the material of the shaft member. When Co is added, the content of Si can be smaller than 0.5 Wt% without causing lowering of sensitivity. On the other hand, when excess amount of Co is added, increasing of hysterisis is caused and hardenability can be lowered. Therefore, the content of Co to be added is limited to be less than or equal to 5.0 Wt%.

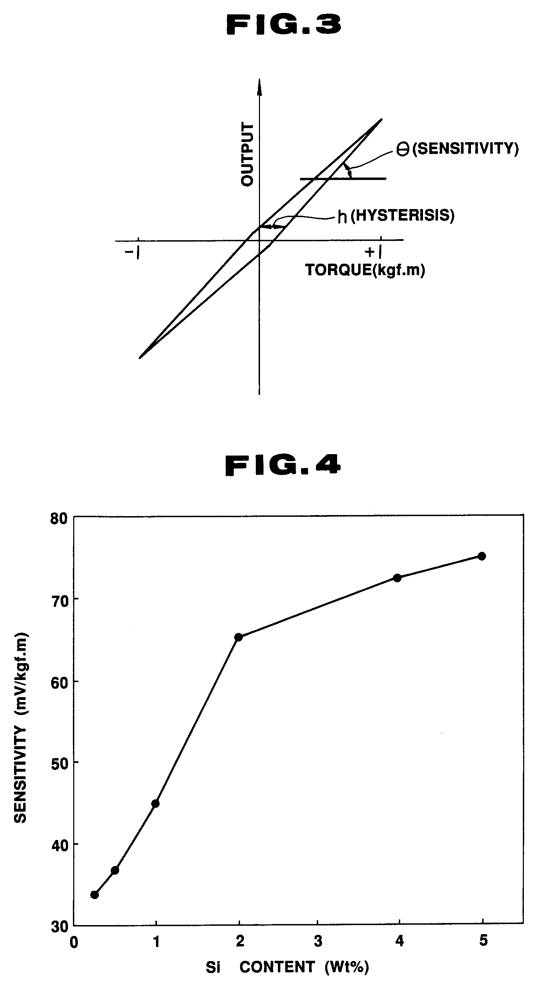

Ni and Cr are known as materials which can improve hardenability and improve strength of the material. On the other hand, Ni has a property for influencing for sensitivity of torque variation. Namely, increasing of content of Ni will cause increasing of hysterisis which cause increasing of angle ϑ in Fig. 3 causing expansion of the distance h. In order to maintain the hysterisis in an acceptable range, the content of Ni is better to be less than or equal to 5.0 Wt%. On the other hind, Cr serves for reducing hysterisis as increasing the content. However, excessive amount of Cr tends to lower sensitivity lower than an acceptable level. Therefore, the maximum amount of Cr to be contained in the steel is set at 5 Wt%.

The steel for forming the shaft member may contain one or more material selected from the following materials:
Pb : less than or equal to 0.5 Wt%;
Bi : less than or equal to 0.5 Wt%;
S : less than or equal to 0.5 Wt%;
P : less than or equal to 0.3 Wt%;
Te : less than or equal to 0.5 Wt%;
Se : less than or equal to 0.5 Wt%; and
Ca : less than or equal to 0.05 Wt%.

The materials set forth above may provide improved machinability so as to improve workability in finishing the shaft member.

The steel for forming the shaft member may further contain one or more material selected from the following materials:
Cu : less than or equal to 1.0 Wt%;
Mo : less than or equal to 1.0 Wt%;
B : less than or equal to 0.05 Wt%
W : less than or equal to 0.5 Wt%;
V : less than or equal to 0.5 Wt%;
Ti : less than or equal to 0.5 Wt%;
Nb : less than or equal to 0.5 Wt%;
Ta : less than or equal to 0.5 Wt%;
Zr : less than or equal to 0.5 Wt%;
Hf : less than or equal to 0.5 Wt%; and
N : less than or equal to 0.1 Wt%.

Cu and Mo are known as material for increasing strength of the base material of the steel. Therefore, these material can be added if desirable. However, when excess amount of Cu is added in the steel, it may lower hot workability. On the other hand, excess amount of Mo may influence for toughness of the steel. Therefore, the amount of Cu and Mo to be added is better to be limited in the range set forth above. B can be added for improving hardenability. Furthermore, one or more selected among W, V, Ti, Nb, Ta, Zr, Hf and N may be advantageously used for obtaining fine crystal and increasing of strength by precipitation hardening.

### EXAMPLES

At first, experiment was taken place for testing relationship between sensitivity and content of Si, and comparative samples were formed of material steels having the following composition.
C : 0.20 Wt%
Si : 0.25 - 5.0 Wt%
Mn : 0.7 Wt%
Cu : 0.1 Wt%
Ni : 0.1 Wt%
Cr : 1.0 Wt%
Mo : 0.15 Wt%
Al : 0.03 Wt%
The content of Si was varied in 0.25 Wt%, 0.5 Wt%, 1.0 Wt%, 2.0 Wt%, 4.0 Wt% and 5.0 Wt%. The comparative samples were produced by melting the material steel in a vacuum induction furnace and forged. The comparative samples were thus formed into forms of round bars of 20 mm diameter. The comparative samples were provided tilted grooves 3a and 3b and the lands 4a and 4b with tilting angle of 45^{o}. The grooves were respectively shaped to have a width of 2 mm, depth of 1 mm. Respective comparative samples were subject oil hardening and carburizing at 910 ^{o}C for three hours and subsequently subject tempering at 170 ^{o}C for two hours.

For the torque sensor including the shaft member prepared as set forth above, the oscillation power of the oscillator 14 and having frequency of 30 KHz and amplitude of 30 mA was supplied. At this condition, torque in a magnitude of 196 N/m (20 kgf/m) was exerted for testing sensitivity. The result of the testing is shown in Fig. 4. As will be clear from Fig. 4, sensitivity increases according to increasing of content of Si in the sample. However, as will be appreciated from observation of Fig. 4, substantial increasing of sensitivity cannot be obtained when Si content is greater than 4 Wt%.

Experiments with samples according to the invention and comparative samples were performed with respect to examples No. 13 to No. 28. The composition of samples and comparative samples as the shaft member in the examples No. 13 to No. 28 heat treatment conditions, sensitivity and hysterisis are shown in the appended table I.

In the experiments, the oscillator 14 was set to generate oscillating alternating current having a frequency of 30 KHz and an amplitude of 30 mA. By exerting torque in a magnitude of 196 N/m (20 kgf/m), the sensitivity which correspond to the rising angle ϑ of the line in Fig. 3 and hysterisis which corresponds to the distance h of lines in Fig. 3 were checked in the experiments.

As will be seen from the appended table I, the examples No. 13 to No. 26 show satisfactorily high sensitivity and satisfactorily small magnitude of hysterisis. In comparison with these examples, the example No. 27 exhibits acceptably high sensitivity. However, in the comparative example No. 27, the magnitude of the hysterisis is unacceptably large. On the other hand, the example No. 28 has unacceptably low sensitivity.

### Second preferred EMBODIMENT

On the other hand, in the preferred embodiments set forth above, the shaft member 2 is provided a property which satisfies one of the following conditions (A), (B) and (C)
(A) saturated magnetostriction λs satisfies:

   $\text{0.5 x 10⁻⁶ ≦ | λs | ≦ 15 x 10⁻⁶}$
(B) ratio between saturated magnetostriction and crystalline magnetic unisotropy coefficient K₁ (J/m³) satisfies:

   $\text{| K₁/λs | ≧ 6 x 10⁸ (K/m³);}$

   an elastic limit τ_{E} (N/mm²) ((kgf/mm²)) versus twisting stress can satisfy:

   ${\text{τ}}_{\text{E}} \text{≧ (20 (Kgf/mm²)) 196 N/mm²}$

   0.2% yield point τ_{0.2} (N/mm²) ((Kgf/mm²)) to twisting stress can satisfy:

   ${\text{τ}}_{\text{0.2}} \text{≧ (40 (Kgf/mm²)) 392,2 N/mm²}$
and (C) a coercive force Hc (A/m) [(Oe)] of the magnetic force can satisfy:

   $\text{398} \frac{\text{A}}{\text{m}} {\text{(5(Oe)) ≦ Hc ≦ (50 (Oe)) 3980}}^{\text{A}} {\text{/}}_{\text{m}}$

   and/or the initial permeability µᵢ is in a range of:

   ${\text{10 ≦ µ}}_{\text{l}} \text{≦ 100}$

   and the maximum permeability µₘ is in a range of:

   ${\text{50 ≦ µ}}_{\text{m}} \text{≦ 250}$

The saturated magnetostriction λs is variable depending upon the material of the shaft member. The sensitivity of the exerted torque is rose according to increasing of the saturated magnetostriction. Therefore, it is preferred to maintain the saturated magnetostriction higher than or equal to 0.5 x 10⁻⁶. On the other hand, when the saturated magnetostriction λs becomes in excess of 15 X 10⁻⁶, hysterisis can be increased to be unacceptable level due to decreasing of the ratio | λs/K₁ | of the saturated magnetostriction λs versus the crystalline magnetic unisotropy coefficient K₁ (J/m³). Therefore, concerning the saturated magnetostriction, the condition set forth above is set.

The crystalline magnetic unisotropy coefficient K₁ is a magnitude of magnetic unisotropy of crystalline magnetic material. The magnitude of unisotropy is variable depending upon composition of the material, crystalline structure, metrographical structure and so forth. Also, the magnetic unisotropy varies according to externally exerted stress, i.e. twisting torque. The ratio | λs/K₁ | of the saturated magnetostriction λs versus the crystalline magnetic unisotropy coefficient K₁ (J/m³) corresponds to maximum stress which can be exerted without causing hysterisis. Therefore, when the stress exerted on the shaft member becomes greater than | λs/K₁ |, then, the output of the torque sensor becomes to vary in non-linear fashion to cause hysterisis. In case of the drive shaft in the automotive power train, large torque may be exerted thereto. Therefore, in view of the possible magnitude of the torque to be exerted, it is preferred to set the value of | λs/K₁ | to be greater than or equal to 6 x 10⁸ (J/m³).

On the other hand, even when the exerted stress is smaller than or equal to the | λs/K₁ | value, plastic deformation may be caused in the shaft member, such as the driver shaft, when substantially large torque is exerted, if the elastic limit τ_{E} (N/mm²) ((Kgf/mm²)) of the material steel is small. This plastic deformation of the shaft member may cause hysterisis. In order to avoid this, it is preferred to set the elastic limit τ_{E} at a value greater than or equal to 196 N/mm² (20 Kgf/mm²). Otherwise, the 0.2% yield point versus twisting stress is provided to be greater than or equal to 392.2 N/mm² (40 Kgf/mm²).

### EXAMPLE

In order to test the performance, experiments were performed. The experiments was performed with respect to a shaft member made of a steel containing Fe as a primary component, C, Si, Mn, Ni, Cr and/or Mo. In production, the composite material of 50 Kg was molten in the vacuum induction furnace. The samples are subsequently treated by forging, normalizing and machining. Subsequently, hardening and tempering were performed in various condition as shown in the appended table II. The samples were provided tilted grooves 3a and 3b and the lands 4a and 4b with tilting angle of 45 ^{o}. The grooves were respectively shaped to have a width of 2 mm, depth of 1 mm.

For the torque sensor including the shaft member prepared as set forth above, the oscillation power of the oscillator 14 and having frequency of 30 KHz and amplitude of 100 mA was supplied. At this condition, torque in a magnitude of 294 N/mm² (30 kgf/m) was exerted for testing sensitivity.

Test was performed to monitor magnetic characteristics, mechanical characteristics and saturated magnetostriction λs. The magnetostriction λs was measured by strain gauge. Also crystalline magnetic unisotropy coefficient K₁ was monitored by torque method. Magnet keeping capacity Hc, initial permeability µᵢ and maximum permeability µₘ were read from B-H curve utilizing a magnetic ring test piece. The initial permeability µᵢ is derived when a permeability at magnetic field H is 50e. Twisting stress was measured by attaching strain gauge and illustrating shearing stress-strain curve. The point whether the shearing stress-strain curve offsetting from a straight line is read as elastic limit τ_{E}. At a point where permanent deformation of 0.2% is regarded as shearing stress τ_{0.2}.

Here, as seen from table II, the examples No. 75 to No. 80 had hysterisis smaller than 10%. To the contrary, the comparative example No. 81, which has saturated magnetostriction | λs | > 15 x 10⁻⁶; the ratio of the saturated magnetostriction λs versus the crystalline magnetic unisotropy coefficient K₁ is | K₁/λs | < 6 x 10⁸ (J/m³); Hc is smaller than 398 A/m (5 (Oe)); the initial permeability is greater than 100 and maximum permeability is greater than 250, hysterisis becomes 20% though high sensitivity is obtained. On the other hand, the comparative example No. 82, which has saturated magnetostriction | λs | < 0.5 x 10⁻⁶; the elastic limit τ_{E} is smaller than 20 Kgf/mm²; 0.2 yield point τ_{0.2} is smaller than 392 N/mm² (40 Kgf/mm²); Hc is smaller than 398 A/m (5 (Oe)); the initial permeability is greater than 100 and maximum permeability is greater than 250, hysterisis becomes 15% and the sensitivity is unacceptably low.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

For example, though the shown embodiment employs electromagnetic coils serving as both of the energization coil and detector coil, the present invention is applicable for the torque sensor which has dedicated coils for energization and detection as that in the prior art. Figs. 7(a) and 7(b) show typical examples of the torque sensor assemblies having dedicated energization coils 30 and detector coils 32 both are wound around a common yoke 34. For these examples, the preferred compositions and process conditions according to the preferred embodiments set forth above, are applicable for improved sensitivity and smaller hysterisis.

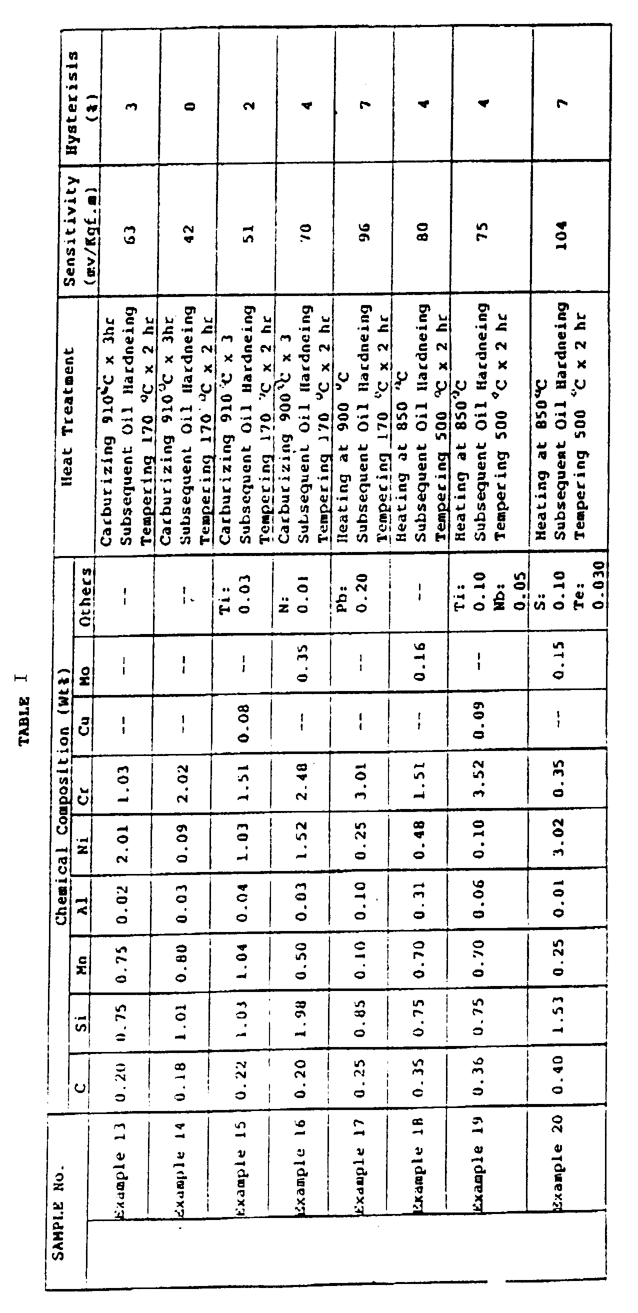

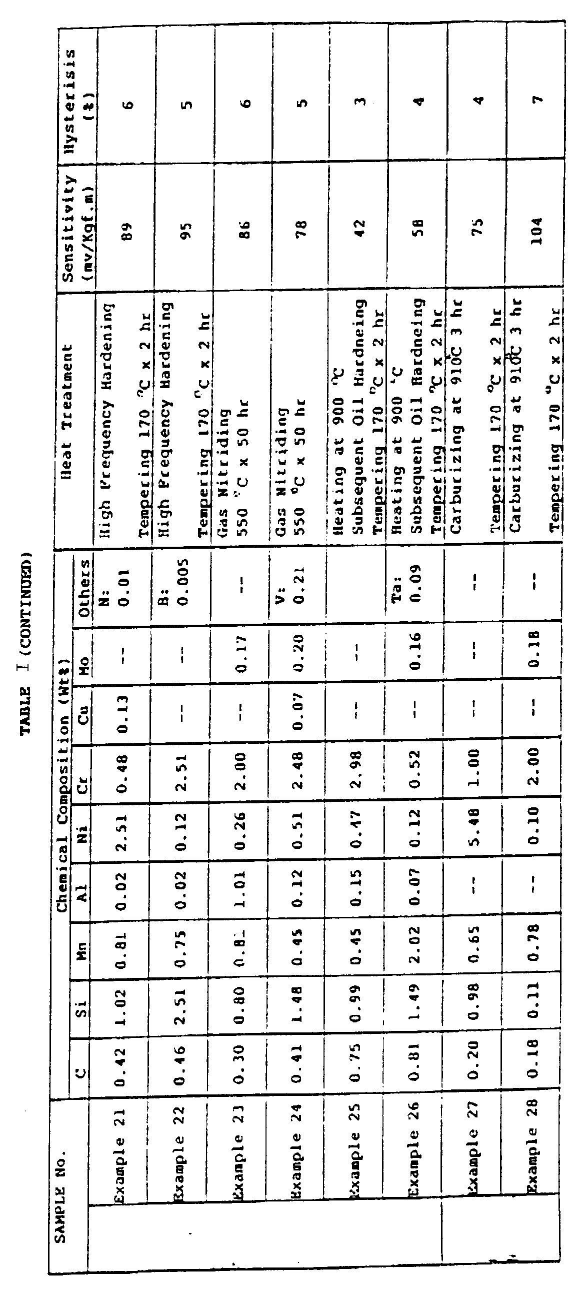

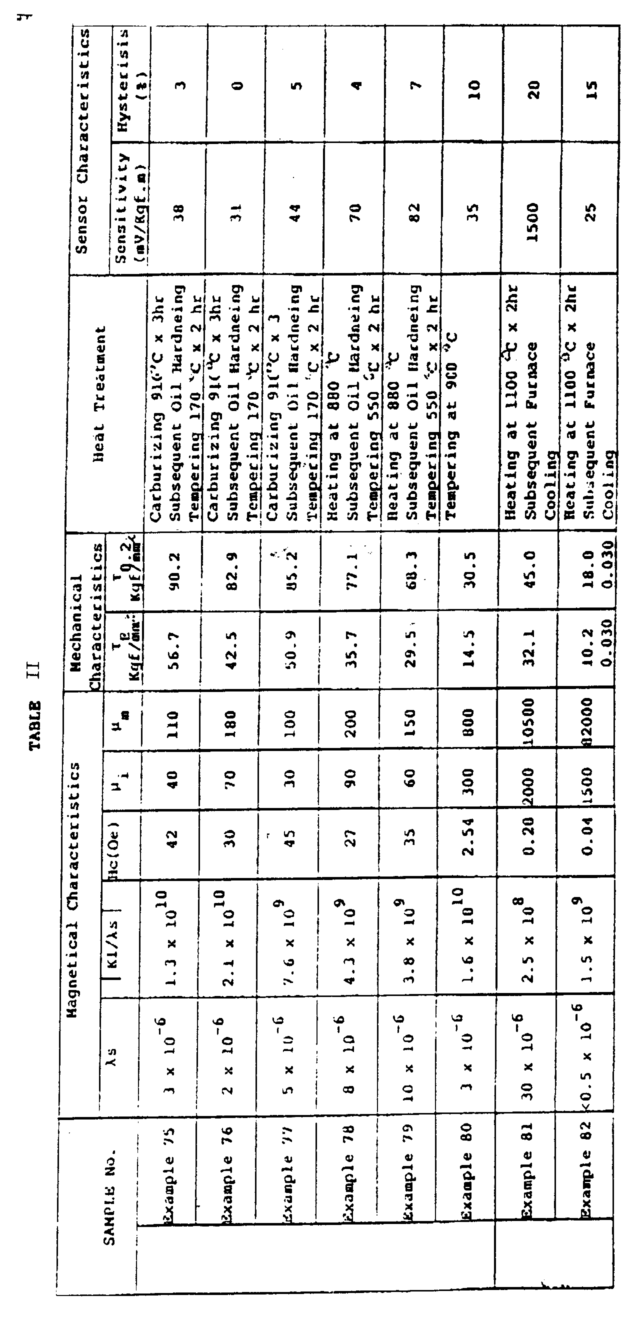

## Claims

1. A torque sensor for monitoring torque exerted on a shaft member, comprising:
means for generating magnetic flux for forming a magnetic circuit extending through a predetermined portion of said shaft member; and
means for monitoring magnetostriction in said shaft member for producing a torque indicative signal having a value variable depending upon said magnetostriction;
said shaft member being made of steel having, at least at said predetermined portion, a composition as follows:
C: 0.1 to 1.5 wt%
Si: more than or equal to 0.5 wt% and less than or equal to 4.0 wt%,
Mn: less than or equal to 3.0 wt%,
Al: more than 0.1 wt% and less than or equal to 3.0 wt%,
Ni: less than or equal to 5.0 wt% and/or Cr: less than or equal to 5.0 wt%,
said steel having at least at said predetermined portion, a remaining content of Fe and inevitable impurities.

2. A torque sensor as set forth in claim 1, wherein said steel further contains a material of Co less than or equal to 5.0 wt%.

3. A torque sensor as set forth in claim 1 or 2, wherein said steel further contains one or more materials selected from the following materials:
Pb: less than or equal to 0.5 wt%
Bi: less than or equal to 0.5 wt%
S: less than or equal to 0.5 wt%
P: less than or equal to 0.3 wt%
Te: less than or equal to 0.5 wt%
Se: less than or equal to 0.5 wt%
Ca: less than or equal to 0.05 wt%

4. A torque sensor as set forth in any one of claim 1, 2, or 3, wherein said steel further contains one or more materials selected from the following materials:
Cu: less than or equal to 1.0 wt%
Mo: less than or equal to 1.0 wt%
B: less than or equal to 0.05 wt%
W: less than or equal to 0.5 wt%
V: less than or equal to 0.5 wt%
Ti: less than or equal to 0.5 wt%
Nb: less than or equal to 0.5 wt%
Ta: less than or equal to 0.5 wt%
Zr: less than or equal to 0.5 wt%
Hf: less than or equal to 0.5 wt%
N: less than or equal to 0.1 wt%

5. A torque sensor as set forth in any one of the preceding claims, wherein said shaft member has, at least at said predetermined portion, a property satisfying one of the following conditions (A) to (C):
(A) saturated magnetostriction λs satisfies:
$\text{0.5 x 10⁻⁶ ≦ |λs| ≦ 15 x 10⁻⁶;}$
(B) ratio between saturated magnetostriction and crystalline magnetic anisotropy coefficient K₁ (J/m³) satisfies:
$\text{|K₁/λs| ≧ 6 x 10⁸(J/m³);}$
and elastic limit τ_{E} N/mm² (kgf/mm²) versus twisting stress can satisfy:
${\text{τ}}_{\text{E}} \text{≧ [20 (kgf/mm²);] 196 N/mm²;}$
0.2% yield point τ_{0.2} N/mm² (kgf/mm²) to twisting stress can satisfy:
${\text{τ}}_{\text{0.2}} \text{≧ [40 (kgf/mm²);] 392.2 N/mm²;}$
and (C) a coercive force Hc A/m (Oe) of the magnetic force can satisfy:
$\text{398 A/m[5(Oe)] ≦ Hc ≦ [50(Oe)] 3980 A/m}$
and/or the initial permeability µᵢ is in a range of:
${\text{10 ≦ µ}}_{\text{i}} \text{≦ 100}$
and the maximum permeability µₘ is in a range of:
${\text{50 ≦ µ}}_{\text{m}} \text{≦ 250.}$

## Patentansprüche

1. Drehmomentfühler zur Überwachung eines auf ein Wellenelement ausgeübten Drehmoments, umfassend:
eine Einrichtung zur Erzeugung eines magnetischen Flusses zur Bildung eines magnetischen Kreislaufs, der sich durch einen vorbestimmten Abschnitt des Wellenelements erstreckt; und
eine Einrichtung zur Überwachung der Magnetostriktion in dem Wellenelement zur Herstellung eines drehmomentanzeigenden Signals, welches einen von der Magnetostriktion abhängigen Wert aufweist;
wobei das aus Stahl hergestellte Wellenelement wenigstens in dem vorbestimmten Abschnitt die folgende Zusammensetzung aufweist:
(C): 0,1 - 1,5 Gew%
Si: mehr als oder gleich 0,5 Gew% und weniger als oder gleich 4,0 Gew%,
Mn: weniger oder gleich 3,0 Gew%,
Al: mehr als 0,1 Gew% und weniger oder gleich 3,0 Gew%,
Ni: weniger als oder gleich 5,0 Gew% und/oder
Cr: weniger als oder gleich 5,0 Gew%,
wobei der Stahl wenigstens im vorbestimmten Abschnitt eine verbleibende Komponente bestehend aus Fe und unvermeidbaren Verunreinigungen aufweist.

2. Drehmomentfühler nach Anspruch 1, wobei der Stahl des weiteren Co-Material von weniger als oder gleich 5,0 Gew% enthält.

3. Drehmomentfühler nach Anspruch 1 oder 2, wobei der Stahl des weiteren eines oder mehrere Materialien enthält, die aus den folgenden Materialien ausgewählt sind:
Pb: weniger als oder gleich 0,5 Gew%
Bi: weniger als oder gleich 0,5 Gew%
S: weniger als oder gleich 0,5 Gew%
P: weniger als oder gleich 0,3 Gew%
Te: weniger als oder gleich 0,5 Gew%
Se: weniger als oder gleich 0,5 Gew%
Ca: weniger als oder gleich 0,05 Gew%.

4. Drehmomentfühler nach einem der Ansprüche 1, 2 oder 3, wobei der Stahl des weiteren eines oder mehrere Materialien enthält, die von den folgenden Materialien ausgewählt sind:
Cu: weniger oder gleich 1,0 Gew%
Mo: weniger oder gleich 1,0 Gew%
B: weniger oder gleich 0,05 Gew%
W: weniger oder gleich 0,5 Gew%
V: weniger oder gleich 0,5 Gew%
Ti: weniger oder gleich 0,5 Gew%
Nb: weniger oder gleich 0,5 Gew%
Ta: weniger oder gleich 0,5 Gew%
Zr: weniger oder gleich 0,5 Gew%
Hf: weniger oder gleich 0,5 Gew%
N: weniger oder gleich 0,1 Gew%.

5. Drehmomentfühler nach einem der vorhergehenden Ansprüche, wobei das Wellenelement wenigstens im vorbestimmten Abschnitt eine Eigenschaft aufweist, die einer der folgenden Bedingungen (A) bis (C) genügen:
(A) Die gesättigte Magnetostriktion λs genügt:
$\text{0,5 x 10⁻⁶ ≦ |λs| ≦ 15 x 10⁻⁶;}$
(B) Das Verhältnis zwischen der gesättigten Magnetostriktion und dem Koeffizienten der kristallinen magnetischen Anisotropie K₁ (J/m³) genügt:
$\text{|K₁/λs| ≧ 6 x 10⁸ (J/m³);}$
und die Elastizitätsgrenze τ_{E} N/mm² (kgf/mm²) gegen Torsionsbeanspruchung kann genügen:
${\text{τ}}_{\text{E}} \text{≧ [20 (kgf/mm²);] 196 N/mm²;}$
Die 0,2 % Streckgrenze τ_{0,2} N/mm² (kgf/mm²) gegenüber Torsionsbeanspruchung kann genügen:
${\text{τ}}_{\text{0.2}} \text{≧ [40 (kgf/mm²);] 392.2 N/mm²;}$
und (C) eine Koerzitivkraft Hc A/m (Oe) der magnetischen Kraft kann genügen:
$\text{398 A/m[5(Oe)] ≦ Hc ≦ [50(Oe)] 3980 A/m}$
und/oder die anfängliche Permeabilität µᵢ ist im Bereich von:
${\text{10 ≦ µ}}_{\text{i}} \text{≦ 100}$
und die maximale Permeabilität µₘ ist im Bereich von:
${\text{50 ≦ µ}}_{\text{m}} \text{≦ 250.}$

## Revendications

1. Capteur de couple pour contrôler un couple exercé sur un élément d'arbre, comprenant :
un moyen pour produire un flux magnétique pour former un circuit magnétique s'étendant à travers une portion prédéterminée de l'élément d'arbre ; et
un moyen pour contrôler la magnétostriction dans l'élément d'arbre pour produire un signal d'indication de couple ayant une valeur variable suivant la magnétostriction ;
l'élément d'arbre étant réalisé en acier ayant, à au moins à ladite portion prédéterminée, une composition comme suit :
C : 0,1 à 1,5 % pds
Si : plus que ou égal à 0,5 % pds et moins que ou égal à 4,0 % pds
Mn : moins que ou égal à 3,0 % pds
Al : plus que 0,1 % pds et moins que ou égal à 3,0 % pds
Ni : moins que ou égal à 5,0 % pds et/ou Cr : moins que égal à 5,0% pds
l'acier ayant au moins à ladite portion prédéterminée un contenu restant en Fe et des impuretés inévitables.

2. Capteur de couple selon la revendication 1, dans lequel l'acier précité contient de plus un matériau en Co moins que ou égal à 5,0 % pds.

3. Détecteur de couple selon la revendication 1 ou 2, dans lequel l'acier précité contient de plus un ou plusieurs matériaux choisis dans les matériaux suivants :
Pb : moins que ou égal à 0,5 % pds
Bi : moins que ou égal à 0,5 % pds
S : moins que ou égal à 0,5 % pds
P : moins que ou égal à 0,3 % pds
Te : moins que ou égal à 0,5 % pds
Se : moins que ou égal à 0,5 % pds
Ca : moins que ou égal à 0,05 % pds

4. Capteur de couple selon l'une quelconque des revendications 1, 2 ou 3, dans lequel l'acier précité contient de plus un ou plusieurs matériaux choisis dans les matériaux suivants :
Cu : moins que ou égal à 1,0 % pds
Mo : moins que ou égal à 1,0 % pds
B : moins que ou égal à 0,05 % pds
W : moins que ou égal à 0,5 % pds
V : moins que ou égal à 0,5 % pds
Ti : moins que ou égal à 0,5 % pds
Nb : moins que ou égal à 0,5 % pds
Ta : moins que ou égal à 0,5 % pds
Zr : moins que ou égal à 0,5 % pds
Hf : moins que ou égal à 0,5 % pds
N : moins que ou égal à 0,1 % pds

5. Capteur de couple selon l'une quelconque des revendications précédentes, dans lequel l'élément d'arbre précité comporte, à au moins à la portion prédéterminée précitée, une propriété satisfaisant l'une des conditions suivantes (A) à (C) :
(A) la magnétostriction saturée λs satisfait :
$\text{O,5 x 10⁻⁶ ≦ |λs| ≦ 15 x 10⁻⁶ ;}$
(B) le rapport entre la magnétostriction et le coefficient et d'anisotropie magnétique cristalline K₁ (J/m³) satisfait :
$\text{|K₁/λs| ≧ 6 x 10⁸ (J/m³) ;}$
et d'une limite élastique τ_{E} N/mm² (kgf/mm²) en rapport avec la contrainte de torsion peut satisfaire :
${\text{τ}}_{\text{E}} \text{≧ [20 (kgf/mm²) ; ] 196 N/mm² ;}$
limite élastique 0,2% τ_{0.2} N/mm² (kgf/mm²) à la contrainte de torsion peut satisfaire :
${\text{τ}}_{\text{0.2}} \text{≧ [40 (kgf/mm²) ; ] 392,2 N/mm²}$
et (C) une force coercitive Hc A/m (Oe) de la force magnétique peut satisfaire :
$\text{398 A/m[5(Oe)] ≦ Hc ≦ [50(Oe)] 3980 A/m}$
et/ou la perméabilité initiale µᵢ est dans une gamme de
${\text{10 ≦ µ}}_{\text{i}} \text{≦ 100}$
et la perméabilité maximum µₘ est dans une gamme de :
${\text{50 ≦ µ}}_{\text{m}} \text{≦ 250}$
